# EUROPEAN PATENT APPLICATION

(11) **EP 1 722 561 A2**
(43) Date of publication of application: **15.11.2006**
(21) Application number: 06113659.4
(22) Date of filing: 09.05.2006
(51) Int. Cl.: H04N 5/655

(54) **Method and apparatus for controlling the rotation angle of a display**

(30) Priority: 09.05.2005 CN 200510072802
(71) Applicant: ASUSTeK Computer Inc., Peitou, Taipei City (TW)
(72) Inventor: Chung, Show-Nan, Taipei (TW)
(74) Representative: Barth, Stephan Manuel

(57) **Abstract**

A display system includes a remote controller and a displaying device. The remote controller outputs a wireless signal. The displaying device adjusts an orientation of a displaying face of the displaying device according to the wireless signal. The displaying device includes a wireless receiving module, a driver and a control unit. The wireless receiving module receives the wireless signal, transforms the wireless signal into an electric signal, and outputs the electric signal. The driver rotates the displaying device. The control unit controls the driver according to the electric signal for the driver rotating the displaying device.

## Description

This application claims the benefit of People's Republic of China application Serial No. 200510072802.4, filed May 9, 2005, the subject matter of which is incorporated herein by reference.

### BACKGROUND OF THE INVENTION

### Field of the Invention

The invention relates in general to a display system, and more particularly to a television of automatically adjusting a viewing angle.

### Description of the Related Art

The conventional television is always disposed at a fixed angle on the television stand or a fixed platform, so the displaying face of the television also directs to a fixed direction. However, the viewing angle of the user in front of the television may be changed frequently, and the orientation of the displaying face of the television has to be adjusted according to the position of the user. When the television is a liquid crystal television, the viewing angle influences the watched image quality. In this case, the user has to push the liquid crystal television to rotate so as to obtain the better watching angle. However, the dimension of the current liquid crystal television is getting larger and larger, so the size and the weight of the liquid crystal television are thus increased. As a result, pushing the television to rotate is laborious and dangerous. For example, the platform on which the liquid crystal television is disposed may be scratched or the objects around the television may be stricken as the television is rotated. In addition, it is inconvenient to the user because he or she may need to adjust the orientation of the displaying face of the television manually.

### SUMMARY OF THE INVENTION

It is therefore an object of the invention to provide a display system capable of automatically adjusting an orientation of a displaying face of a television so as to align the displaying face with a user using a remote controller and to provide a better viewing angle for the user in a simpler way.

The invention achieves the above-identified object by providing a display system including a remote controller and a displaying device. The remote controller outputs a wireless signal. The displaying device adjusts an orientation of a displaying face of the displaying device according to the wireless signal. The displaying device includes a wireless receiving module, a driver and a control unit. The wireless receiving module receives the wireless signal, transforms the wireless signal into an electric signal, and outputs the electric signal. The driver rotates the displaying device. The control unit controls the driver according to the electric signal for the driver rotating the displaying device.

The invention also achieves the above-identified object by providing a method of controlling a rotation angle of a display system. The display system includes a displaying device and a remote controller. The method includes the steps of: outputting a wireless signal from the remote controller; receiving the wireless signal and converting the wireless signal into an electric signal corresponds to an emitting position of the wireless signal; and adjusting an orientation of a displaying face of the displaying device according to the electric signal.

Other objects, features, and advantages of the invention will become apparent from the following detailed description of the preferred but non-limiting embodiment. The following description is made with reference to the accompanying drawings.

### BRIEF DESCRIPTION OF THE DRAWINGS

FIG. 1 is a block diagram showing a display system according to a preferred embodiment of the invention.

FIG. 2 is a schematic illustration showing a circuit of a displaying device according to embodiment of the invention.

FIG. 3 is a schematic illustration showing an example of disposing an infrared receiving unit according to embodiment of the invention.

FIG. 4 is a schematic illustration showing another example of disposing the infrared receiving unit according to embodiment of the invention.

### DETAILED DESCRIPTION OF THE INVENTION

The invention discloses a display system such as a television. The orientation of a displaying face of the television is automatically adjusted according to the position of a remote controller. Thus, the displaying face may be aligned with the user who is using the remote controller, a better viewing angle may be provided for the user in a simpler manner, and the danger and inconvenience of rotating the television by the hand may be avoided.

In addition, the television may be a liquid crystal television, a plasma television or a conventional cathode ray tube (CRT) television. The display system of this embodiment may be applied, without limitation, to the above-mentioned televisions. The preferred embodiment of this invention will be described in the following.

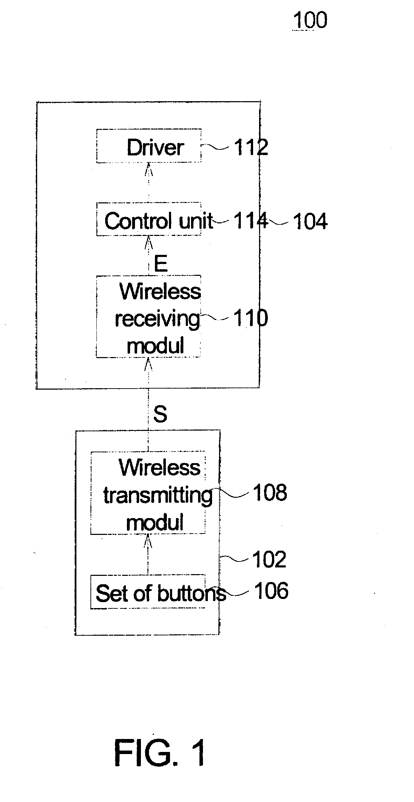

FIG. 1 is a block diagram showing a display system according to a preferred embodiment of the invention. Referring to FIG. 1, the display system 100 includes a remote controller 102 and a displaying device 104 for displaying an image or images. The remote controller 102 may control the functions of, for example, adjusting the volume of the television, selecting the channel, or switching the power.

The remote controller 102 includes a set of buttons 106 and a wireless transmitting module 108. As at least one of the buttons 106 is triggered, an operation signal corresponding to the triggered button is outputted. The wireless transmitting module 108 converts the operation signal into a wireless signal S and outputs the wireless signal S by wireless transmission.

The displaying device 104 includes a wireless receiving module 110, a driver 112 and a control unit 114. The wireless receiving module 110 receives the wireless signal S, and outputs an electric signal E corresponding to the emitting position from which the wireless signal S emits. The control unit 114 controls the driver 112 according to the electric signal E. The driver 112, for example, a stepping motor or a DC motor is controlled by the control unit 114 to rotate the displaying device 104.

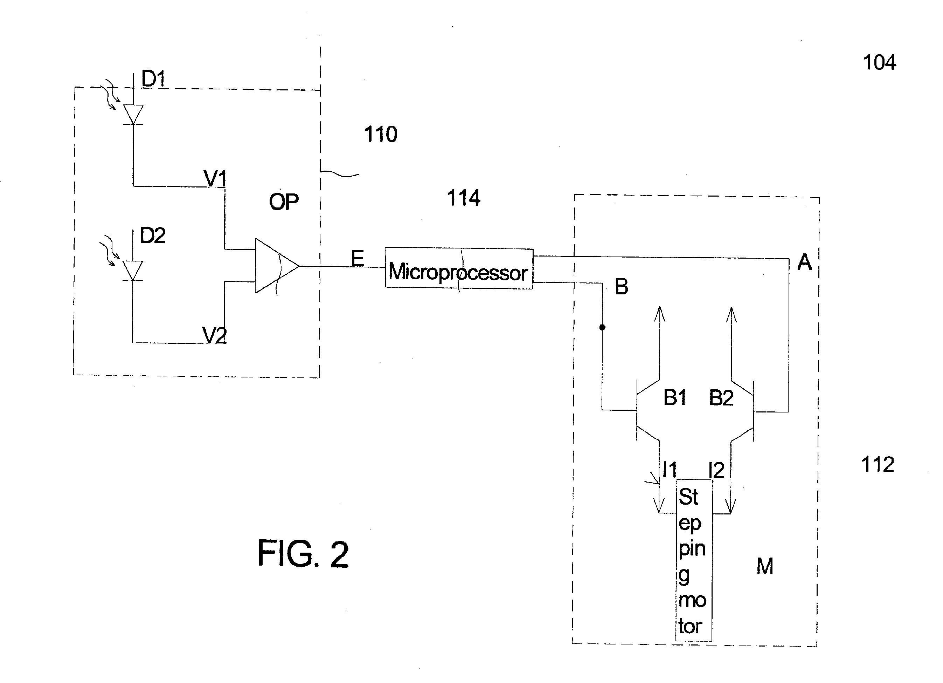

FIG. 2 is a schematic illustration showing a circuit of a displaying device according to embodiment of the invention. The wireless signal S, for example, an infrared wireless signal. The wireless receiving module 110 includes two infrared receiving units D1 and D2 and a comparator OP. The infrared receiving units D1 and D2, such as photo diodes, sense the intensities of the wireless signals S, and correspondingly generate two voltage signals V1 and V2 according to the intensities of the received wireless signals S. The comparator OP determines an intensity difference between the wireless signals S received by the two infrared receiving units D1 and D2 by way of comparison, so as to judge the emitting position of the wireless signal S. That is, the comparator OP compares the voltage signal V1 with the voltage signal V2 and then outputs the electric signal E. The control unit 114, such as a microprocessor, determines the position, at which the remote controller 102 is located, corresponding to the electric signal E. For example, a look-up table, which records the relationship between the electric signal E and the rotation angle, is stored in the control unit 114. The control unit 114 determines the rotation angle corresponding to the electric signal E according to this look-up table and thus controls the driver 112. The driver 112 may be composed of, for example, a plurality of transistors, such as bipolar junction transistors (BJT) B1 and B2, and a stepping motor M. The operation of the driver 112 is described in the following.

When the terminal A in FIG. 2 is low, the terminal B receives a high pulse, the transistor B2 turns on and the transistor B1 cuts off, such that the current 12 drives the stepping motor M to rotate the displaying device 104 in a direction. On the contrary, when the terminal A receives a high pulse and the terminal B is low, the transistor B1 turns on and the transistor B2 cuts off, such that the current 11 drives the stepping motor M to rotate the displaying device 104 in an opposite direction. Thus, the control unit 114 outputs the above-mentioned high pulse to the terminal A or the terminal B according to the electric signal E, and controls the rotation angle of the stepping motor M according to the outputted number of high pulses so as to rotate the displaying device 104 to a corresponding viewing angle and make the displaying face to face the used remote controller 102.

In addition, another way for controlling the driver 112 is to enable the control unit 114 to output positive or negative pulses to the driver 112 so as to control the motor to rotate clockwise or counterclockwise. Thus, the BJT transistors B1 and B2 of FIG. 2 may be omitted. In addition, the DC motor may also replace the stepping motor. In this case, the displaying device 104 may be rotated by different angles as long as the pulse width is changed.

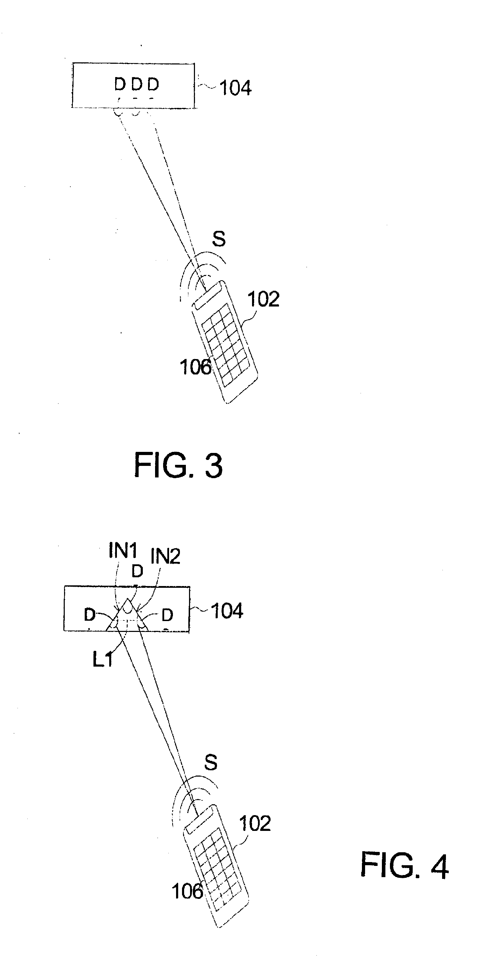

FIG. 3 is a schematic illustration showing an example of disposing an infrared receiving unit according to embodiment of the invention. The displaying device 104 further includes another infrared receiving unit D3, which performs an operation corresponding to the wireless signal S containing an operation instruction of, for example, selecting the channel or adjust the volume. As shown in FIG. 3, a straight line connecting the infrared receiving units D1 and D2 is substantially parallel to a horizontal surface, and the receiving units D1 and D2 are spaced apart by a distance. The horizontal surface may be, for example, a floor. When the position of the remote controller 102 is biased rightwards relative to the displaying face of the television, the user presses a specific button among the set of buttons 106, such as the button for adjusting the orientation of the displaying face of the displaying device 104, and the wireless transmitting module 108 outputs the infrared wireless signal S. Because the angles of receiving the signals by the infrared receiving units D1 and D2 are different from each other, the control unit 114 can control the driver 112 to rotate the displaying device 104 to the predetermined angle of orientation according to the electric signal E, which is the difference between the two signals. Thus, the user only has to press the specific button on the remote controller 102, and the display system 100 can automatically adjust the orientation of the displaying device 104 to face the user who is using the remote controller 102. So, the better viewing angle may be provided in a simpler way.

In addition, the invention is not restricted by the way of detecting the position of the remote controller 102 when the specific button is triggered. Instead, the operation of rotating the displaying device may be performed by triggering any button, such as the button of selecting the channel, the button of adjusting the volume, or each of the buttons of performing other function. When the button is triggered, the generated infrared wireless signal S is received by the infrared receiving units D1, D2 and D3, and the microprocessor 114 performs the control of automatically detecting the viewing angle according to the wireless signals S received by the infrared receiving units D1 and D2 at different angles.

FIG. 4 is a schematic illustration showing another example of disposing the infrared receiving unit according to embodiment of the invention. As shown in FIG. 4, the difference between FIGS. 4 and 3 is the relationships between the infrared receiving units D1, D2 and D3. The displaying device 104 has a first inclined surface IN1 and a second inclined surface IN2 opposite to the first inclined surface IN1. The two infrared receiving units D1 and D2 are respectively disposed on the first inclined surface IN1 and the second inclined surface IN2, and a straight line L1 connecting the two infrared receiving units D1 and D2 is substantially parallel to a horizontal surface, such as the floor. The infrared receiving unit D3 is disposed at a central position. In addition, the operational relationships between the infrared receiving units D1 and D2 and the control unit 114 are the same as those described hereinabove, and detailed descriptions thereof will be omitted.

In the display system according to the embodiment of the invention, the orientation of the displaying face of the television may be automatically adjusted by detecting the position of the remote controller for the system. Thus, the user can obtain a better viewing angle in a simpler way, and the risk of damaging the television or the danger of striking the objects around the television when the television is pushed may be avoided. In addition, the television design may be more human-oriented.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A display system (100) for controlling a rotation angle, the display system (100) comprising:
a remote controller (102) for outputting a wireless signal (S).and
a displaying device (104) for adjusting an orientation of a displaying face of the displaying device (104) according to the wireless signal (S), the displaying device (104) comprising:
a wireless receiving module (110) for receiving the wireless signal (S) and outputting an electric signal (E) corresponding to an emitting position of the wireless signal (S);
a driver (112) for rotating the displaying device (104); and
a control unit (114) for controlling the driver (112) to rotate the displaying device (104) according to the electric signal (E) for the displaying face of the displaying device (104) substantially facing the remote controller (102).

2. The display system (100) according to claim 1, wherein the wireless signal (S) is an infrared wireless signal, and the wireless receiving module (110) outputs the electric signal (E) according to the emitting position of the infrared wireless signal.

3. The display system (100) according to claim 2, wherein the wireless receiving module (110) comprises at least two infrared receiving units (D1, D2) and a comparator (OP) for comparing different intensities of the wireless signals (S) received by the at least two infrared receiving units (D1, D2) so as to judge the emitting position of the wireless signal (S).

4. The display system (100) according to claim 3, wherein at least two infrared receiving units (D1, D2) is substantially parallel to a horizontal surface, and the at least two infrared receiving units (D1, D2) are spaced apart by a distance.

5. The display system (100) according to claim 3, wherein the displaying device (104) has a first inclined surface (IN1) and a second inclined surface (IN2) opposite to the first inclined surface (IN1), the at least two infrared receiving units (D1, D2) are respectively disposed on the first inclined surface (IN1) and the second inclined surface (IN2), and a straight line (L1) connecting the at least two infrared receiving units (D1, D2) is substantially parallel to a horizontal surface.

6. The display system (100) according to claim 3, wherein the at least two infrared receiving units (D1, D2) are photo diodes.

7. The display system (100) according to claim 1, wherein the displaying device (104) is a plasma television.

8. The display system (100) according to claim 1, wherein the displaying device (104) is a liquid crystal television.

9. A method of controlling a rotation angle of a display system (100), the display system (100) comprising a displaying device (104) and a remote controller (102), the method comprising the steps of:
outputting a wireless signal (S) from the remote controller (102);
receiving the wireless signal (S) and converting the wireless signal (S) into an electric signal (E) corresponds to an emitting position of the wireless signal (S); and
adjusting an orientation of a displaying face of the displaying device (104) according to the electric signal (E).

10. The method according to claim 9, wherein the wireless signal (S) is an infrared wireless signal.
